(19) Europäisches Patentamt
European Patent Office
Office européen des brevets

(11) **EP 2 863 387 A1**

(12) **EUROPEAN PATENT APPLICATION**
published in accordance with Art. 153(4) EPC

(43) Date of publication:
**22.04.2015 Bulletin 2015/17**

(51) Int Cl.:
**G10L 19/00** (2013.01)     **H04N 21/439** (2011.01)

(21) Application number: **13826484.1**

(86) International application number:
**PCT/KR2013/006730**

(22) Date of filing: **26.07.2013**

(87) International publication number:
**WO 2014/021587 (06.02.2014 Gazette 2014/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.07.2012 KR 20120084207**

(71) Applicant: **Intellectual Discovery Co., Ltd.
Seoul 135-745 (KR)**

(72) Inventor: **OH, Hyunoh
Seongnam-si, Gyeonggi-do 463-881 (KR)**

(74) Representative: **Regimbeau
20, rue de Chazelles
75847 Paris Cedex 17 (FR)**

(54) **DEVICE AND METHOD FOR PROCESSING AUDIO SIGNAL**

(57) The present invention relates to a method and device for processing an audio signal and, more particularly, to a method and device for decoding an audio signal by using addition and subtraction signals in an extended form with respect to audio signals of two or more channels received through a communication signal. A method for encoding audio signals of at least two channels, according to the present invention, comprises the steps of: receiving a first audio signal and a second audio signal; obtaining a correlation between the first audio signal and the second audio signal; determining whether the correlation is equal to or greater than a reference value; calculating a first gain value and a second gain value by using the first audio signal and the second audio signal if the determination result is true; and generating a first transmission audio signal and a second transmission audio signal by using the first audio signal, the second audio signal, the first gain value and the second gain value, wherein the first transmission audio signal and the second transmission audio signal are encoded by using a perceptual coding technique.

FIG. 5

## Description

## Technical Field

The present invention relates generally to a method and device for processing audio signals and, more particularly, to a method and device that decode audio signals using expanded sum and difference signals between two or more channel audio signals that are received through digital media or broadcasting, or communication signals.

## Background Art

Conventional high-quality audio coding methods use a method of detecting an inaudible signal band attributable to human auditory masking using a psychoacoustic model, and concentrate quantization noise occurring in a coding procedure on a masking band, thus enabling high compressibility while implementing the same sound quality as that of the original audio signals upon listening to the audio signals. Such a high-quality audio coding method is referred to as 'perceptual coding.'

MPEG-1/2 Layer-III (MP3), Advanced Audio Coding (AAC), etc., which are representative perceptual coding methods, occasionally use mid-side stereo coding that is one of joint stereo coding methods so as to effectively compress stereo audio signals. A method of independently coding two channels without performing joint stereo coding is referred to as 'dual mono.'

## Disclosure

## Technical Problem

By conventional dual mono coding and mid-side stereo coding methods, quantization noise to be masked is not completely and spatially coincident with audio signals, so that a problem may arise in that a masking phenomenon cannot be maximally utilized. That is, there may occur a case where the compression efficiency of perceptual coding is limited. Therefore, in order to maximally utilize a masking phenomenon, a procedure for transforming audio signals to be coded is required.

## Technical Solution

In accordance with an aspect of the present invention, there is provided an audio signal processing method, the method coding audio signals of at least two channels, including receiving a first audio signal and a second audio signal, obtaining a correlation between the first audio signal and the second audio signal, determining whether the correlation is equal to or greater than a reference value, calculating a first gain value and a second gain value using the first audio signal and the second audio signal if a result of determination is true, and generating a first transmission audio signal and a second transmission audio signal using the first audio signal, the second audio signal, the first gain value, and the second gain value, wherein the first transmission audio signal and the second transmission audio signal are coded using a perceptual coding technique.

In accordance with another aspect of the present invention, there is provided an audio signal processing device, including receiving a first transmission audio signal, a second transmission audio signal, and an expanded mid-side matrix use information, determining whether channel gain information has been received, depending on the expanded mid-side matrix use information, and if it is determined that the channel gain information has been received, calculating a first gain value and a second gain value using the channel gain information, and generating a first output audio signal and a second output audio signal using the first transmission audio signal, the second transmission audio signal, the first gain value, and the second gain value, wherein if it is determined that the channel gain information has not been received, the first output audio signal is identical to the first transmission audio signal and the second output audio signal is identical to the first transmission audio signal.

## Advantageous Effects

In accordance with the present invention, masking based on a psychoacoustic model may be maximally utilized regardless of the spatial locations of sound sources, and thus the improvement of sound quality in high-quality audio coding may be expected.

The advantages of the present invention are not limited to the above-described effects, and effects not described here may be clearly understood by those skilled in the art to which the present invention pertains from the present specification and the attached drawings.

## Description of Drawings

FIG. 1 is a diagram showing the spatial locations of signals and quantization noise in a conventional dual mono coding method;
FIG. 2 is a diagram showing the spatial locations of signals and quantization noise in a conventional mid-side stereo coding method;
FIG. 3 is a diagram showing the spatial locations of signals and quantization noise when signal levels of left and right channels are different from each other in the conventional dual mono coding method;
FIG. 4 is a diagram showing the spatial locations of signals and quantization noise when signal levels of left and right channels are different from each other in the conventional mid-side stereo coding method;
FIG. 5 is an exemplary configuration diagram showing an audio encoder to which an expanded mid-side stereo coding method according to the present invention is applied;

FIG. 6 is a diagram showing a first signal processing procedure in which an expanded mid-side matrix processing unit generates a transmission audio signal using an input signal according to an embodiment of the present invention;

FIG. 7 is a diagram illustrating the masking of quantization noise due to the effect of processing an expanded mid-side matrix according to the present invention;

FIG. 8 is a diagram showing a second signal processing procedure in which the expanded mid-side matrix processing unit generates a transmission audio signal using an input signal according to another embodiment of the present invention;

FIG. 9 is a flowchart showing an expanded mid-side stereo coding procedure according to an embodiment of the present invention;

FIG. 10 is an exemplary configuration diagram showing an audio decoder to which an expanded mid-side stereo decoding method according to the present invention is applied;

FIG. 11 is an exemplary configuration diagram showing a procedure for processing an expanded mid-side inverse matrix according to the present invention;

FIG. 12 is an exemplary configuration diagram showing a case where an expanded mid-side inverse matrix is not used according to the present invention; and

FIG. 13 is a flowchart showing a procedure for processing an expanded mid-side inverse matrix according to an embodiment of the present invention.

**Best Mode**

In accordance with an aspect of the present invention, there is provided an audio signal processing method, the method coding audio signals of at least two channels, including receiving a first audio signal and a second audio signal, obtaining a correlation between the first audio signal and the second audio signal, determining whether the correlation is equal to or greater than a reference value, calculating a first gain value and a second gain value using the first audio signal and the second audio signal if a result of determination is true, and generating a first transmission audio signal and a second transmission audio signal using the first audio signal, the second audio signal, the first gain value, and the second gain value, wherein the first transmission audio signal and the second transmission audio signal are coded using a perceptual coding technique.

In the present invention, the perceptual coding technique in the audio signal processing method may further include calculating a first masking threshold for the first transmission audio signal and a second masking threshold for the second transmission audio signal.

In the present invention, the audio signal processing method may perceptually code the first transmission audio signal using the first masking threshold.

In the present invention, the audio signal processing method may further include, when the correlation is less than the reference value, generating the transmission audio signals so that the first transmission audio signal is identical to the first audio signal and the second transmission audio signal is identical to the second audio signal.

In the present invention, the audio signal processing method may be configured to calculate the first gain value and the second gain value using a channel level difference value.

Here, the first transmission audio signal may include more main sound sources than those of at least the first audio signal and the second audio signal.

Further, the second transmission audio signal may include fewer main sound sources than those of at least the first audio signal and the second audio signal.

In accordance with another aspect of the present invention, there is provided an audio signal processing device, including receiving a first transmission audio signal, a second transmission audio signal, and an expanded mid-side matrix use information, determining whether channel gain information has been received, depending on the expanded mid-side matrix use information, and if it is determined that the channel gain information has been received, calculating a first gain value and a second gain value using the channel gain information, and generating a first output audio signal and a second output audio signal using the first transmission audio signal, the second transmission audio signal, the first gain value, and the second gain value, wherein if it is determined that the channel gain information has not been received, the first output audio signal is identical to the first transmission audio signal and the second output audio signal is identical to the first transmission audio signal.

Here, the audio signal processing method may receive channel gain information when the expanded mid-side matrix use information is 1.

Further, the audio signal processing method may be configured such that, if the channel gain information has been received, the first output audio signal is obtained by multiplying the first gain value by a sum of the first transmission audio signal and the second transmission audio signal, and the second output audio signal is obtained by multiplying the second gain value by a difference between the first transmission audio signal and the second transmission audio signal.

Furthermore, in the audio signal processing method, the first transmission audio signal and the second transmission audio signal are perceptually coded signals.

Here, the first gain value may be proportional to a square root of a value obtained by adding a constant of 1 to a square of the channel gain information, and the second gain value may be proportional to a value obtained by dividing a square root of a value, obtained by adding a constant of 1 to a square of the channel gain information, by the channel gain information.

Here, the first output audio signal and the second output audio signal may be audio signals respectively output to two paired speakers.

Hereinafter, preferred embodiments of the present invention will be described in detail with reference to the attached drawings. Prior to the following detailed description of the present invention, it should be noted that the terms and words used in the specification and the claims should not be construed as being limited to ordinary meanings or dictionary definitions, and the present invention should be understood to have meanings and concepts coping with the technical spirit of the present invention based on the principle that an inventor can appropriately define the concepts of terms in order to best describe his or her invention. Therefore, the embodiments described in the specification and the configurations illustrated in the drawings are merely preferred examples and do not exhaustively present the technical spirit of the present invention. Accordingly, it should be appreciated that there may be various equivalents and modifications that can replace the embodiments and the configurations at the time at which the present application is filed.

The terms in the present invention may be construed based on the following criteria, and even terms, not described in the present specification, may be construed according to the following gist. Coding may be construed as encoding or decoding according to the circumstances, and information is a term encompassing values, parameters, coefficients, elements, etc. and may be differently construed depending on the circumstances, but the present invention is not limited thereto.

Among methods for coding stereo audio which are audio reproduction methods using two left/right speakers, a mid-side stereo coding method is present, which has been devised to solve especially a Binaural Masking Level Difference (BMLD) that is known based on psychoacoustic experiments. That is, a BMLD is a psychoacoustic masking phenomenon meaning that masking is possible when a masker causing masking and a maskee to be masked are present in the same direction in a space.

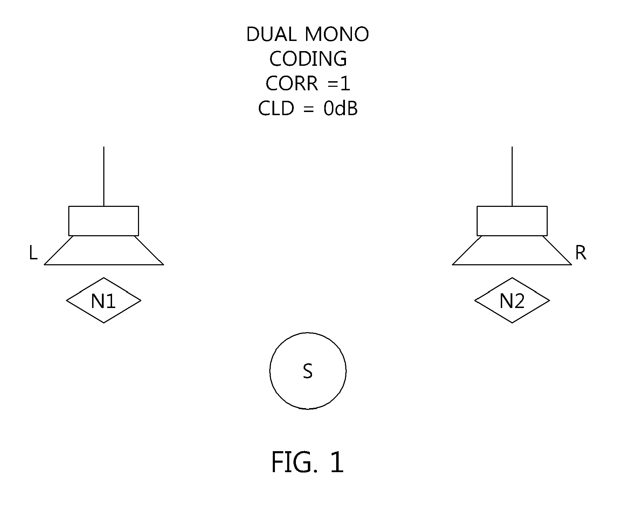

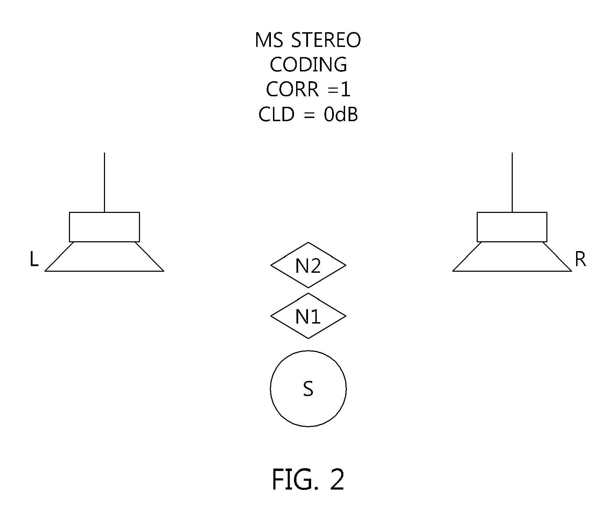

FIG. 1 illustrates spatial locations of signals S and quantization noises N1 and N2 in a conventional dual mono coding method, and FIG. 2 illustrates spatial locations of signals S and quantization noises N1 and N2 in a conventional mid-side (sum-difference) stereo coding method.

When a correlation between two channel audio signals of stereo audio signals is very high and the magnitudes of the signals are identical to each other, images (sound images) for sounds are formed at the center of a space between two speakers. When a correlation therebetween is not present, independent sounds are output from respective speakers and then the sound images thereof are respectively formed on the speakers. As shown in an example shown in FIG. 1, when respective channels are independently coded (dual mono manner) for input signals having a maximum correlation, sound images of audio signals S are formed at the center and sound images of quantization noises N1 and N2 are separately formed on the respective speakers. That is, since quantization noises N1 and N2 in the respective channels do not have a correlation, the images thereof are separately formed on the respective speakers. Therefore, quantization noises N1 and N2, intended to be the maskee, are not masked due to spatial disparity, and thus a problem arises in that a person hears the corresponding noises as distortion. In order to solve such a problem, mid-side stereo coding shown in FIG. 2 is intended to generate a mid (sum) signal obtained by summing two channel signals and a side (difference) signal obtained by subtracting the two channel signals from each other, perform psychoacoustic modeling using the mid signal and the side signal, and perform quantization using a resulting psychoacoustic model. In accordance with this method, the sound images of the quantization noises N1 and N2 generated in the example of FIG. 2 are formed at the same location as that of the audio signals S. Meanwhile, it is preferable to code independent signals having no correlation between two channel audio signals in a dual mono coding manner as in the case of an existing scheme. Therefore, such a mid-side (MS) coding method may be variably applied depending on the characteristics of input signals.

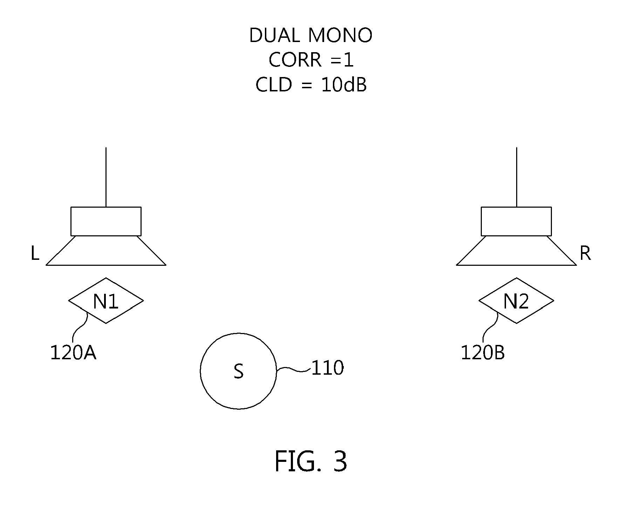

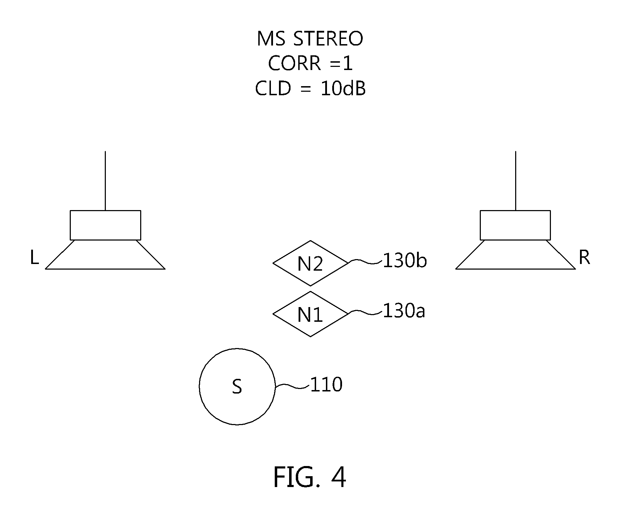

FIGS. 3 and 4 illustrate spatial locations of signals S and quantization noises N1 and N2 when the signal levels of a left channel L and a right channel R are different from each other. FIG. 3 illustrates a conventional dual mono coding scheme and FIG. 4 illustrates a conventional mid-side stereo coding scheme.

FIGS. 3 and 4 illustrate a case where a level difference between left and right channels is 10 dB (left channel is 10 dB greater than right channel). As illustrated in FIGS. 3 and 4, when a correlation between input stereo audio signals is high, but the signal levels of the left and right channels are different, sound sources S 110 are present at any locations other than the center or left and right side speakers in a sound space. In this case, a problem arises in that, even if the mid-side stereo coding method shown in FIG. 4 as well as the conventional dual mono scheme shown in FIG. 3 is used, it is difficult to align the locations of the sources S 110 that are the masker with the locations of quantization noises N1 120a or 130a and N2 120b or 130b that are the maskee. To solve this problem, the present invention presents an expanded mid-side stereo coding method.

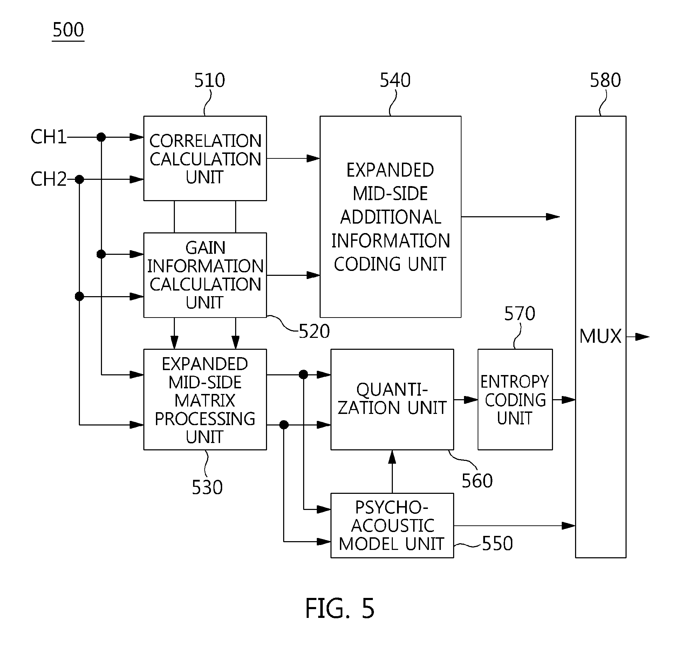

FIG. 5 illustrates an embodiment of an audio encoder 500 to which an expanded mid-side stereo coding method according to the present invention is applied. Referring to FIG. 5, each of two channel audio signals CH1 and CH2 is input to a correlation calculation unit 510, a gain information calculation unit 520, and an expanded mid-side matrix processing unit 530. In this case, CH1 and CH2 may be audio block data corresponding to the predetermined time section of stereo audio signals, or signals corresponding to part or all of signals in a frequency domain of a filter bank converted for an audio block. Meanwhile, the present invention represents a single independent audio signal by a channel (e.g., CH1 or CH2), wherein the term "channel" denotes a single signal reproduced through a single loud speaker. However, the present invention is not limited by such a term, and the channel of the present invention may include a single independent audio object signal, a single signal in which multiple audio signals are combined and represented, etc.

The correlation calculation unit 510 calculates the levels of correlations in the given sections of input channels CH1 and CH2. When an input signal corresponding to CH1 is x and an input signal corresponding to CH2 is y, the present invention may use the value of an Inter-Channel Coherence (Correlation) (ICC) defined by the following equation as a correlation in an embodiment.

[Equation 1]

$$ICC = \frac{\sum xy^*}{\sqrt{\sum x^2 \sum y^2}}$$

In accordance with an embodiment of the present invention, a correlation may be obtained using various methods in addition to the method using ICC, as shown in Equation 1, and the present invention is not limited to specific methods. In accordance with the present invention, whether to perform expanded mid-side matrix processing may be determined based on the calculated correlation. However, the embodiment of the present invention is not limited thereto, and may use other methods so as to determine whether to perform expanded mid-side matrix processing of the present invention.

The gain information calculation unit 520 calculates gains g1 and g2 to be used for expanded mid-side matrix processing according to the present invention by using inputs CH1 and CH2. A channel level difference c required to obtain the gain of an expanded mid-side matrix may be obtained by the following equation:

[Equation 2]

$$c = \sqrt{\frac{\sum x^2}{\sum y^2}}$$

That is, the channel level difference coefficient c denotes the ratio of signal magnitudes (power or energy) of CH1 and CH2. An embodiment for calculating gains g1 and g2 of the expanded mid-side matrix using the channel level difference c is given by the following equation:

[Equation 3]

$$g_1 = \frac{1}{\sqrt{1+c^2}}, g_2 = \frac{c}{\sqrt{1+c^2}}$$

In accordance with another embodiment of the present invention, the gains g1 and g2 may be calculated by further multiplying additional gains required to compensate for the energy of the input signals. The expanded mid-side matrix processing unit 530 receives the input signals CH1 and CH2 and generates expanded mid-side signals TCH1 and TCH2 using a matrix operation according to the present invention.

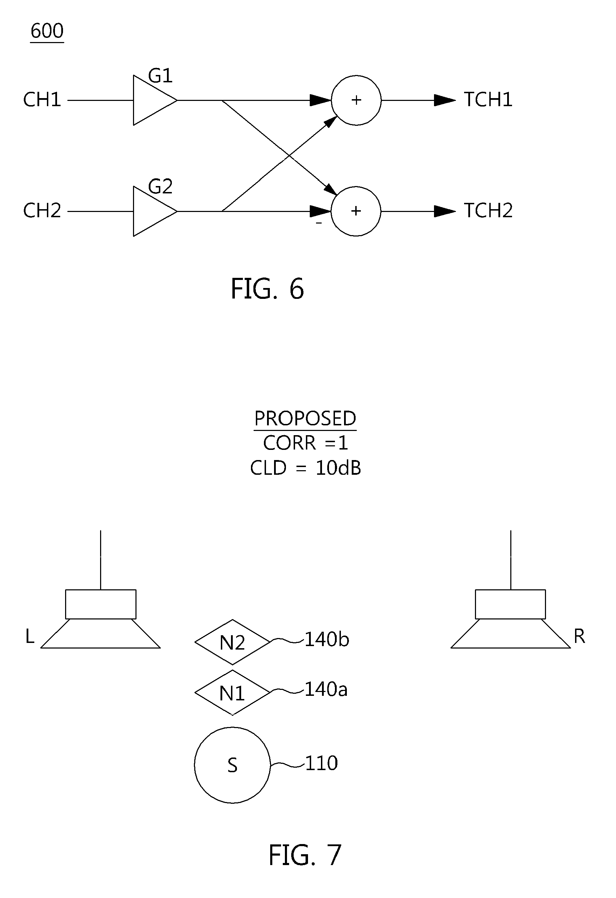

FIG. 6 illustrates a first signal processing procedure 600 in which the expanded mid-side matrix processing unit 530 generates transmission audio signals TCH1 and TCH2 using input signals CH1 and CH2 according to an embodiment of present invention. This procedure is represented by the following equation:

[Equation 4]

$$TCH_1 = g_1 CH_1 + g_2 CH_2$$
$$TCH_2 = g_1 CH_1 - g_2 CH_2$$

That is, the expanded mid-side matrix processing unit 530 according to an embodiment of the present invention generates expanded mid-side signals TCH1 and TCH2 using the input signals CH1 and CH2 and gains g1 and g2. The generated expanded mid-side signals TCH1 and TCH2 may be transmission audio signals according to an embodiment of the present invention.

In accordance with an embodiment of the present invention, it may be determined whether to perform the first signal processing procedure 600, using correlation information. For example, when a correlation value (ICC) obtained in Equation 1 is greater than a preset threshold, the expanded mid-side matrix processing unit 530 may perform the signal processing procedure 600. Therefore, the expanded mid-side matrix processing unit 530 may require correlation information and expanded mid-side matrix gain information together with the input signals CH1 and CH2 so as to generate the expanded mid-side signals TCH1 and TCH2.

FIG. 7 illustrates a phenomenon in which quantization noise is masked due to the effect of expanded mid-side matrix processing according to an embodiment of the present invention. That is, FIG. 7 shows a case where input audio signals according to the embodiments of FIGS. 3 and 4 are transformed into expanded mid-side signals by the first signal processing procedure 600 and are then output. When the expanded mid-side matrix processing procedure according to the embodiment of the present invention is performed, the signals TCH1 and TCH2 are transformed so that images of the expanded mid-side signals TCH1 and TCH2 are located around a location where main sound sources S 110 are located in a sound space between two channels. Therefore, quantization noises N1 140a and N2 140b generated as a result of perceptual coding of the transformed signals TCH1 and TCH2 are desirably, spatially masked by the sound sources S 110, as shown in FIG. 7, thus obtaining the effect of reducing distortion in sound quality.

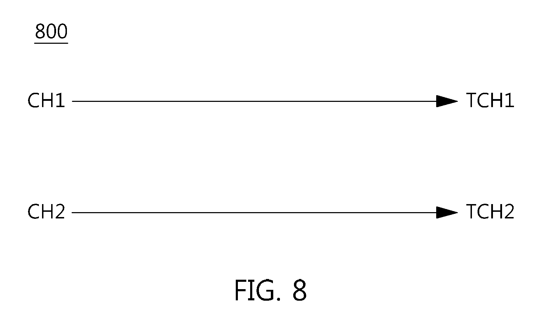

FIG. 8 illustrates a second signal processing procedure 800 in which the expanded mid-side matrix processing unit 530 generates transmission audio signals TCH1 and TCH2 using input signals CH1 and CH2 according to another embodiment of the present invention. As described above, the expanded mid-side matrix processing unit 530 may determine whether to perform expanded mid-side matrix processing according to the first signal processing process 600, based on correlation information and/or a channel level difference coefficient. For example, when the value of ICC is less than or equal to a preset threshold value, the expanded mid-side matrix processing unit 530 may independently code respective channels as in the case of a conventional scheme, without performing processing for expanded mid-side stereo coding. That is, as shown in FIG. 8 and the following Equation 5, the expanded mid-side matrix processing unit 530 may immediately output the input signals CH1 and CH2 as transmission audio signals TCH1 and TCH2, respectively.

[Equation 5]

$$TCH_1 = CH_1$$
$$TCH_2 = CH_2$$

Referring back to FIG. 5, a psychoacoustic model unit 550 receives the output signals TCH1 and TCH2 of the expanded mid-side matrix processing unit 530, performs psychoacoustic modeling for each channel, and outputs masking thresholds for respective channels. For example, a Signal-to-Mask ratio (SMR) indicative of the ratio of signal power in each signal component to the amount of masking may be calculated for channel signals in a specific analysis section. Therefore, a target signal for which SMR is to be calculated may vary depending on the results of processing performed by the expanded mid-side matrix processing unit 530 according to the present invention.

A quantization unit 560 receives the output signals TCH1 and TCH2 of the expanded mid-side matrix processing unit 530, receives masking thresholds SMR through the psychoacoustic model unit 560, and then performs quantization. In this case, the quantization unit 560 determines a quantization step based on the SMR, thus preventing a listener from hearing quantization noise upon reproduction because the quantization noise is masked by the signals. This is similar to that used in a perceptual coding method such as conventional AAC.

An entropy coding unit 570 performs additional data compression by performing entropy coding, such as Huffman coding or arithmetic coding, on the transmission audio signals qTCH1 and qTCH2 quantized by the quantization unit 560. According to the implementation method, the quantization unit 560 and the entropy coding unit 570 may be optimized by repetitively performing operations within a single loop.

Meanwhile, the correlation value ICC that is the output of the correlation calculation unit 510 and the channel level difference coefficient c that is the output of the gain information calculation unit 520 may be input to an expanded mid-side additional information coding unit 540 and may be coded. For example, expanded mid-side use information ems_flag, indicating whether an expanded mid-side matrix operation has been performed depending on the correlation value, and the channel level difference coefficient c may be coded. In this case, if the expanded mid-side matrix operation has been used, ems_flag may be coded as ems_flag = 1, whereas if it has not been used, ems_flag may be coded as ems_flag = 0. The additional information coded in this way may be transferred to the decoder.

Meanwhile, to minimize an error between gain values used in the encoder and the decoder, it is preferable that even the encoder use, for transmission, the quantized values of the channel level difference coefficient c and gains g1 and g2.

A multiplexer (MUX) unit 580 generates an output bitstream by combining the output of the expanded mid-side additional information coding unit 540, the output of the entropy coding unit 570, and the output of the psychoacoustic model unit 550. As described above, the output of the expanded mid-side additional information coding unit 540 may include the correlation value ICC, the channel level difference coefficient c, the expanded mid-side use information ems_flag, etc. Further, the output of the entropy coding unit 570 may include entropy-coded signals of the quantized transmission audio signals qTCH1 and qTCH2. Furthermore, the output of the psychoacoustic model unit 550 may include masking thresholds for respective channels, for example, SMR values. The MUX unit 580 generates an output bitstream by multiplexing at least one of the above-described outputs.

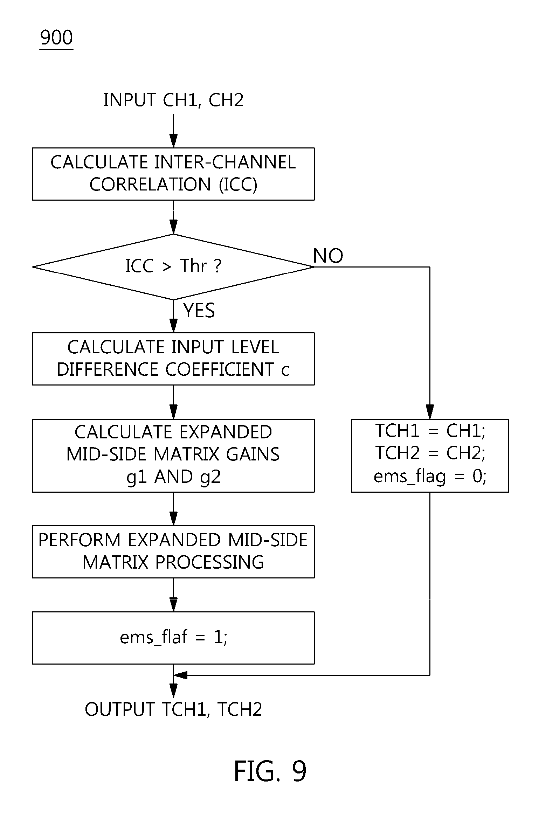

FIG. 9 is a flowchart showing an expanded mid-side stereo coding procedure according to an embodiment of the present invention. The individual steps of FIG. 9 may be performed by the audio encoder 500 of the present invention that has been described with reference to FIG. 5.

First, the audio encoder of the present invention may receive audio signals CH1 and CH2 and calculate an inter-channel coherence (correlation) value (ICC) using the received signals. Next, the audio encoder determines whether the correlation value ICC is greater than a preset threshold.

If the correlation value ICC is greater than the preset threshold, the audio encoder calculates an input level difference coefficient c between the received audio signals CH1 and CH2. Further, the audio encoder calculates expanded mid-side matrix gains g1 and g2 according to the above-described embodiment. Next, the audio encoder of the present invention generates transmission audio signals TCH1 and TCH2 by performing expanded mid-side matrix processing on the input audio signals CH1 and CH2. The audio encoder performs coding by setting expanded mid-side use information to ems_flag = 1.

In contrast, if the correlation value ICC is not greater than the preset threshold, the audio signals CH1 and CH2 may be set to the transmission audio signals TCH1 and TCH2 without change. In this case, the audio encoder performs coding by setting the expanded mid-side use information to ems_flag = 0. The audio encoder according to the present invention may output the transmission audio signals TCH1 and TCH2 generated in this way. In accordance with an exemplary embodiment, the audio encoder may generate quantized signals qTCH1 and qTCH2 of the respective transmission audio signals TCH1 and TCH2. In accordance with another embodiment, the audio encoder may output signals obtained by performing quantization and entropy coding on the transmission audio signals TCH1 and TCH2.

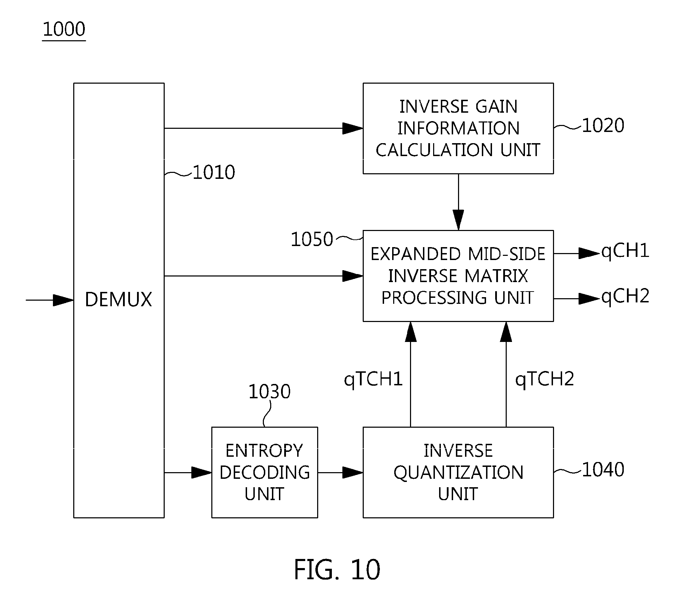

FIG. 10 illustrates an embodiment of an audio decoder 1000 for decoding a bitstream coded by the expanded mid-side stereo coding method according to the present invention. Referring to FIG. 10, an audio decoding procedure may be performed via a reverse process of the encoding procedure described with reference to FIG. 5. First, the audio decoder 1000 receives a transmitted bitstream, and separates the bitstream into pieces of information required for respective decoding steps via a demultiplexer (DEMUX) unit 1010.

An entropy decoding unit 1030 reconstructs entropy-coded data into quantized signals. An inverse quantization unit 1040 acquires qTCH1 and qTCH2, that is, transmission audio signals, by performing inverse quantization on the reconstructed signals. In this case, the inverse quantization unit 1040 may determine an inverse quantization step based on separate additional information. The additional information may be determined based on the masking thresholds SMR described with reference to FIG. 5. The transmission audio signals qTCH1 and qTCH2 acquired by the inverse quantization unit 1040 are sent to an expanded mid-side inverse matrix processing unit 1050.

An inverse gain information calculation unit 1020 calculates inverse matrix gain values h1 and h2 to be used for expanded mid-side inverse matrix processing using the transmitted channel level difference coefficient c by the following equation:

[Equation 6]

$$h_1 = \frac{\sqrt{1+c^2}}{2}$$

$$h_2 = \frac{\sqrt{1+c^2}}{2c}$$

Meanwhile, as described with reference to Equation 3, when energy compensation gains are included in gains g1 and g2 according to another embodiment of the present invention, separate gains corresponding to the energy compensation gains may be additionally multiplied by the gain values even in Equation 6.

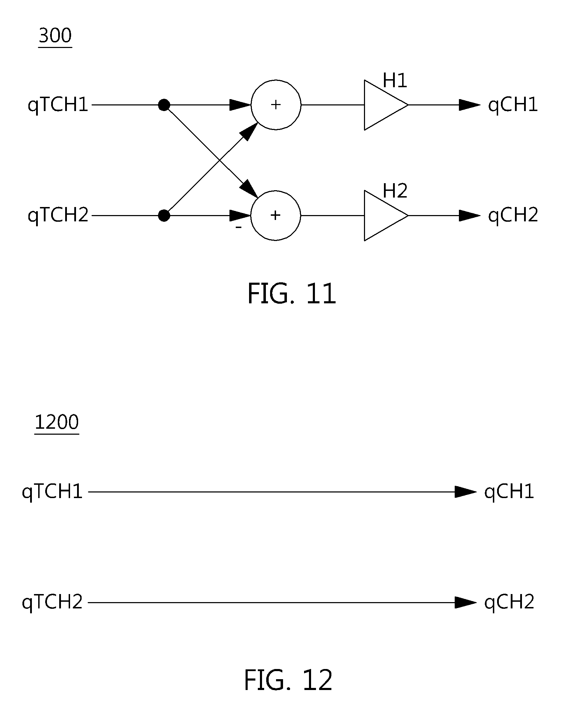

An expanded mid-side inverse matrix processing unit 1050 receives the transmission audio signals qTCH1 and qTCH2 and the previously calculated gain values h1 and h2 and performs an operation for outputting the output audio signals qCH1 and qCH2. An inverse matrix operation procedure performed by the expanded mid-side inverse matrix processing unit 1050 may be performed as any one of a third signal processing procedure 1100 shown in FIG. 11 and a fourth signal processing procedure 1200 shown in FIG. 12. The third signal processing procedure 1100 is a mid-side inverse matrix operation corresponding to the first signal processing procedure 600 shown in FIG. 6, and the fourth signal processing procedure 1200 is a mid-side inverse matrix operation corresponding to the second signal processing procedure 800 shown in FIG. 8.

The audio decoder 1000 according to the embodiment of the present invention generates the output audio signals qCH1 and qCH2 by using one of the third signal processing procedure 1100 and the fourth signal processing procedure 1200, based on the expanded mid-side additional information (e.g., expanded mid-side use information ems_flag) acquired from the bitstream. If the acquired expanded mid-side additional information ems_flag = 1 is satisfied, the expanded mid-side inverse matrix processing unit 1050 may generate output audio signals qCH1 and qCH2 using the third signal processing procedure 1100, as given by the following Equation 7:

[Equation 7]

$$qCH_1 = h_1 \cdot (qTCH_1 + qTCH_2)$$

$$qCH_2 = h_2 \cdot (qTCH_1 - qTCH_2)$$

However, when the acquired expanded mid-side additional information ems_flag = 0 is satisfied, the expanded mid-side inverse matrix processing unit 1050 may generate the output audio signals qCH1 and qCH2 by bypassing the transmission audio signals qTCH1 and qTCH2 according to the fourth signal processing procedure 1100. In accordance with an embodiment of the present invention, when expanded mid-side additional information ems_flag = 0 is satisfied, the channel level difference coefficient c may not be transmitted to the audio decoder 1000, and the inverse gain information calculation unit 1020 of the audio decoder 1000 may not be operated, either.

When the output audio signals qCH1 and qCH2 of the expanded mid-side inverse matrix processing unit 1050 are time domain signals, they may be immediately reproduced as output audio signals through speakers. However, when the output audio signals qCH1 and qCH2 are frequency domain signals, an operation of an inverse filter bank (e.g. Inverse Modified Discrete Cosine Transform: IMDCT, not shown) may be performed, and then the output audio signals may be output as final audio signals.

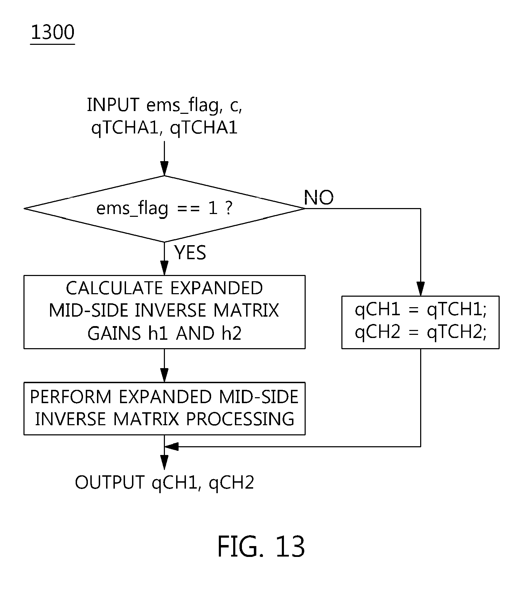

FIG. 13 is a flowchart showing an expanded mid-side inverse matrix processing procedure according to an embodiment of the present invention. Individual steps of FIG. 13 may be performed by the audio decoder 1000 according to the present invention that has been described with reference to FIG. 10.

First, the audio decoder according to the embodiment of the present invention may receive a bitstream. In the embodiment of the present invention, the bitstream may include quantized signals qTCH1 and qTCH2, a channel level difference coefficient c, expanded mid-side use information ems_flag, etc. However, the information of the present invention is not limited to such information, and the bitstream received by the audio decoder may include audio signals and additional information that have been combined to generate the bitstream by the MUX unit 580 of FIG. 5.

Then, the audio decoder according to the embodiment of the present invention determines whether the expanded mid-side use information ems_flag included in the received bitstream is 1 (ems_flag = 1). If ems_flag = 1 is satisfied, the audio decoder calculates expanded mid-side inverse matrix gains h1 and h2. Further, expanded mid-side inverse matrix processing is performed on the signals qTCH1 and qTCH2 using the calculated gains h1 and h2, and thus output audio signals qCH1 and qCH2 are generated.

However, if ems_flag is not 1 (i.e., ems_flag = 0), the audio encoder may set the signals qTCH1 and qTCH2 to the output audio signals qCH1 and qCH2 without change.

By means of the above procedure, although the expanded mid-side matrix processing methods according to the present invention have been described as embodiments of audio signal coding and decoding methods which have two channel input signals as targets, they may be applied to two or more channel input signals based on the spirit of the same invention. For example, when channel signals rendered via Vector Based Amplitude Panning (VBAP), which is a method for locating sound sources among three speaker output signals in a 3D space, are input, it is possible to perform coding so that masking thresholds for respective channel signals and quantization noise attributable to the channel signals are spatially masked more desirably with the signals using similar mid-side technology in consideration of the rendered channel signals, instead of technology for independently coding three channel input signals for respective channels.

Further, expanded mid-side matrix processing according to the present invention may also be applied to parametric coding in addition to coding/decoding procedures for respective channels of audio signals. That is, in the case of a parametric stereo technique that is commonly known as the coding of methods for downmixing stereo signals into mono signals and generating stereo signals using separate additional information, if gain values are generated and signals are downmixed, as in the method proposed in the present invention, instead of performing general downmixing, masking in perceptual coding for coding the signals may be more effectively operated, and thus the improvement of the overall sound quality may be expected.

Furthermore, the present invention may be expanded and applied to a signal processing procedure for downmixing audio signals in addition to audio coding, or to a procedure in which two or more signals having similarity must be transmitted in the case of image or video signals or biometric information signals other than audio signals.

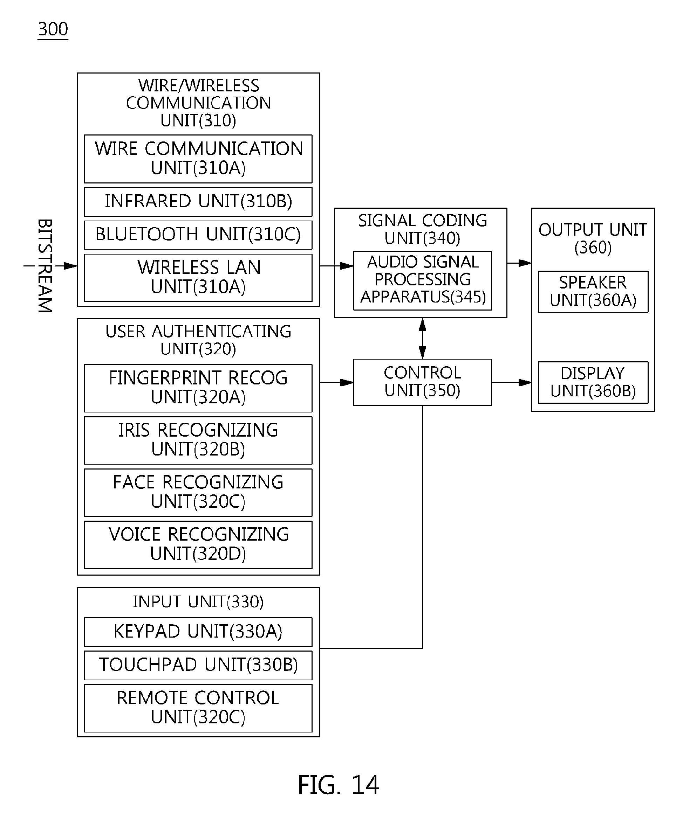

FIG. 14 is a diagram showing a relationship between products in which the audio signal processing device according to an embodiment of the present invention is implemented. Referring to FIG. 14, a wired/wireless communication unit 310 receives bitstreams in a wired/wireless communication manner. More specifically, the wired/wireless communication unit 310 may include one or more of a wired communication unit 310A, an infrared unit 310B, a Bluetooth unit 310C, and a wireless Local Area Network (LAN) communication unit 310D.

A user authentication unit 320 receives user information and authenticates a user, and may include one or more of a fingerprint recognizing unit 320A, an iris recognizing unit 320B, a face recognizing unit 320C, and a voice recognizing unit 320D, which respectively receive fingerprint information, iris information, face contour information, and voice information, convert the information into user information, and determine whether the user information matches previously registered user data, thus performing user authentication.

An input unit 330 is an input device for allowing the user to input various types of commands, and may include, but is not limited to, one or more of a keypad unit 330A, a touch pad unit 330B, and a remote control unit 330C.

A signal coding unit 340 performs encoding or decoding on audio signals and/or video signals received through the wired/wireless communication unit 310, and outputs audio signals in a time domain. The signal coding unit 340 may include an audio signal processing device 345. In this case, the audio signal processing device 345 corresponds to the above-described embodiments (the encoder 500 according to an embodiment and the decoder 1000 according to another embodiment), and such an audio signal processing device 345 and the signal coding unit 340 including the device may be implemented using one or more processors.

A control unit 350 receives input signals from input devices and controls all processes of the signal coding unit 340 and an output unit 360. The output unit 360 is a component for outputting the output signals generated by the signal coding unit 340, and may include a speaker unit 360A and a display unit 360B. When the output signals are audio signals, they are output through the speaker unit, whereas when the output signals are video signals, they are output via the display unit.

The audio signal processing method according to the present invention may be produced in a program to be executed on a computer and stored in a computer-readable storage medium. Multimedia data having a data structure according to the present invention may also be stored in a computer-readable storage medium. The computer-readable recording medium includes all types of storage devices readable by a computer system. Examples of a computer-readable storage medium include Read Only Memory (ROM), Random Access Memory (RAM), Compact Disc ROM (CD-ROM), magnetic tape, a floppy disc, an optical data storage device, etc., and may include the implementation of the form of a carrier wave (for example, via transmission over the Internet). Further, the bitstreams generated by the encoding method may be stored in the computer-readable medium or may be transmitted over a wired/wireless communication network.

As described above, although the present invention has been described with reference to limited embodiments and drawings, it is apparent that the present invention is not limited to such embodiments and drawings, and the present invention may be changed and modified in various manners by those skilled in the art to which the present invention pertains without departing from the technical spirit of the present invention and equivalents of the accompanying claims.

Mode for Invention

As described above, related contents in the best mode for practicing the present invention have been described.

Industrial Applicability

The present invention may be applied to procedures for encoding and decoding audio signals or performing various types of processing on audio signals.

**Claims**

1. An audio signal processing method, comprising:

   receiving a bitstream including a first transmission audio signal, a second transmission audio signal, and expanded mid-side use information;
   receiving a channel level difference coefficient corresponding to the first transmission audio signal and the second transmission audio signal; and
   generating a first output audio signal and a second output audio signal from the first transmission audio signal and the second transmission audio signal, based on the expanded mid-side use information,
   wherein when a value of the expanded mid-side use information is 1, the generating comprises:

      calculating a first gain value and a second gain value using the channel level difference coefficient; and
      generating the first output audio signal and the second output audio signal using the first and second transmission audio signals and the first and second gain values.

2. The audio signal processing method of claim 1, wherein the receiving comprises, when the value of the expanded mid-side use information is 1, receiving the channel level difference coefficient.

3. The audio signal processing method of claim 1, wherein the first output audio signal is obtained by multiplying the first gain value by a sum of the first transmission audio signal and the second transmission audio signal, and the second output audio signal is obtained by multiplying the second gain value by a difference between the first transmission audio signal and the second transmission audio signal.

4. The audio signal processing method of claim 1, wherein the first transmission audio signal and the second transmission audio signal are perceptually coded signals.

5. The audio signal processing method of claim 1, wherein the first gain value is proportional to a square root of a value obtained by adding a constant of 1 to a square of the channel level difference coefficient, and the second gain value is proportional to a value obtained by dividing a square root of a value, obtained by adding a constant of 1 to a square of the channel level difference coefficient, by the channel level difference coefficient.

6. The audio signal processing method of claim 1, wherein the first output audio signal and the second

**EP 2 863 387 A1**

output audio signal are stereo audio signals respectively output to two speakers.

DUAL MONO
CODING
CORR =1
CLD = 0dB

FIG. 1

MS STEREO
CODING
CORR =1
CLD = 0dB

L

N2

N1

S

R

FIG. 2

DUAL MONO
CORR =1
CLD = 10dB

L

N1

120A

S —110

R

N2

120B

FIG. 3

MS STEREO
CORR =1
CLD = 10dB

L

N2 — 130b

N1 — 130a

S — 110

R

FIG. 4

500

FIG. 5

600

FIG. 6

PROPOSED
CORR =1
CLD = 10dB

FIG. 7

800

CH1 ———————————————————→ TCH1

CH2 ———————————————————→ TCH2

FIG. 8

900

INPUT CH1, CH2

CALCULATE INTER-CHANNEL
CORRELATION (ICC)

ICC > Thr ? — NO

YES

CALCULATE INPUT LEVEL
DIFFERENCE COEFFICIENT c

CALCULATE EXPANDED
MID-SIDE MATRIX GAINS
g1 AND g2

TCH1 = CH1;
TCH2 = CH2;
ems_flag = 0;

PERFORM EXPANDED MID-SIDE
MATRIX PROCESSING

ems_flaf = 1;

OUTPUT TCH1, TCH2

FIG. 9

1000

FIG. 10

EP 2 863 387 A1

300

qTCH1 ———•—————→ (+) ————▷ H1 ————▶ qCH1

qTCH2 ———•—————→ (+) ————▷ H2 ————▶ qCH2

FIG. 11

1200

qTCH1 ——————————————▶ qCH1

qTCH2 ——————————————▶ qCH2

FIG. 12

20

1300

INPUT ems_flag, c,
qTCHA1, qTCHA1

ems_flag == 1 ?

NO

YES

CALCULATE EXPANDED
MID-SIDE INVERSE MATRIX
GAINS h1 AND h2

qCH1 = qTCH1;
qCH2 = qTCH2;

PERFORM EXPANDED MID-SIDE
INVERSE MATRIX PROCESSING

OUTPUT qCH1, qCH2

FIG. 13

300

WIRE/WIRELESS COMMUNICATION UNIT(310)

WIRE COMMUNICATION UNIT(310A)

INFRARED UNIT(310B)

BLUETOOTH UNIT(310C)

WIRELESS LAN UNIT(310A)

BITSTREAM

USER AUTHENTICATING UNIT(320)

FINGERPRINT RECOG UNIT(320A)

IRIS RECOGNIZING UNIT(320B)

FACE RECOGNIZING UNIT(320C)

VOICE RECOGNIZING UNIT(320D)

INPUT UNIT(330)

KEYPAD UNIT(330A)

TOUCHPAD UNIT(330B)

REMOTE CONTROL UNIT(320C)

SIGNAL CODING UNIT(340)

AUDIO SIGNAL PROCESSING APPARATUS(345)

CONTROL UNIT(350)

OUTPUT UNIT (360)

SPEAKER UNIT(360A)

DISPLAY UNIT(360B)

FIG. 14

## INTERNATIONAL SEARCH REPORT

| International application No. |
| --- |
| **PCT/KR2013/006730** |

| A. CLASSIFICATION OF SUBJECT MATTER |
| --- |
| ***G10L 19/00(2006.01)i, H04N 21/439(2011.01)i*** |
| According to International Patent Classification (IPC) or to both national classification and IPC |

| B. FIELDS SEARCHED |
| --- |
| Minimum documentation searched (classification system followed by classification symbols)<br>G10L 19/00; G10L 19/02; H04N 21/439 |
| Documentation searched other than minimum documentation to the extent that such documents are included in the fields searched<br>Korean Utility models and applications for Utility models: IPC as above<br>Japanese Utility models and applications for Utility models: IPC as above |
| Electronic data base consulted during the international search (name of data base and, where practicable, search terms used)<br>eKOMPASS (KIPO internal) & Keywords: mid-side, audio, perceptual coding |

| C. DOCUMENTS CONSIDERED TO BE RELEVANT | | |
| --- | --- | --- |
| Category* | Citation of document, with indication, where appropriate, of the relevant passages | Relevant to claim No. |
| A | US 2007-0208557 A1 (LI, Jin et al.) 06 September 2007<br>See paragraphs [0056]-[0060]; and figures 7-9. | 1-6 |
| A | US 2005-0234716 A1 (VERNON, Stephen Decker et al.) 20 October 2005<br>See paragraphs [0009], [0017]-[0023]; and figure 1. | 1-6 |
| A | US 2008-0004873 A1 (LIU, Chi-Min et al.) 03 January 2008<br>See paragraphs [0051]-[0062]; and figures 3, 4. | 1-6 |
| A | US 2008-0091415 A1 (SCHAFER, Ronald W.) 17 April 2008<br>See paragraphs [0043]-[0048]; and figures 2-5. | 1-6 |
| A | US 6499010 B1 (FALLER, Christof et al.) 24 December 2002<br>See column 4, lines 25-67; column 7, line 59-column 9, line 6; and figures 2, 5. | 1-6 |

| ☐ Further documents are listed in the continuation of Box C. | ☒ See patent family annex. |
| --- | --- |

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |
| Date of the actual completion of the international search<br><br>26 NOVEMBER 2013 (26.11.2013) | Date of mailing of the international search report<br><br>**27 NOVEMBER 2013 (27.11.2013)** |
| Name and mailing address of the ISA/KR<br>Korean Intellectual Property Office<br>Government Complex-Daejeon, 189 Seonsa-ro, Daejeon 302-701,<br>Republic of Korea<br>Facsimile No. 82-42-472-7140 | Authorized officer<br><br><br>Telephone No. |

Form PCT/ISA/210 (second sheet) (July 2009)

INTERNATIONAL SEARCH REPORT
Information on patent family members

International application No.

**PCT/KR2013/006730**

| Patent document cited in search report | Publication date | Patent family member | Publication date |
|---|---|---|---|
| US 2007-0208557 A1 | 06/09/2007 | US 7835904 B2 | 16/11/2010 |
| US 2005-0234716 A1 | 20/10/2005 | AU 2005-239290 A1 | 10/11/2005 |
| | | AU 2005-239290 B2 | 11/12/2008 |
| | | BR PI0510065 A | 16/10/2007 |
| | | CA 2561435 A1 | 10/11/2005 |
| | | CN 1942930 A | 04/04/2007 |
| | | CN 1942930 B | 03/11/2010 |
| | | EP 1738354 A1 | 03/01/2007 |
| | | EP 1738354 B1 | 24/07/2013 |
| | | IL 178124 D0 | 31/12/2006 |
| | | JP 04903130 B2 | 28/03/2012 |
| | | JP 2007-534986 A | 29/11/2007 |
| | | KR 10-1126535 B1 | 23/03/2012 |
| | | KR 10-2007-0001233 A | 03/01/2007 |
| | | MX PA06010866 A | 15/12/2006 |
| | | MY 142333 A | 15/11/2010 |
| | | US 7406412 B2 | 29/07/2008 |
| | | WO 2005-106851 A1 | 10/11/2005 |
| US 2008-0004873 A1 | 03/01/2008 | NONE | |
| US 2008-0091415 A1 | 17/04/2008 | EP 2097896 A2 | 09/09/2009 |
| | | JP 2010-507105 A | 04/03/2010 |
| | | WO 2008-045537 A2 | 17/04/2008 |
| | | WO 2008-045537 A3 | 17/07/2008 |
| US 6499010 B1 | 24/12/2002 | CA 2327405 A1 | 04/07/2001 |
| | | CA 2327405 C | 03/05/2005 |
| | | DE 60000047 D1 | 21/02/2002 |
| | | DE 60000047 T2 | 11/07/2002 |
| | | EP 1117089 A1 | 18/07/2001 |
| | | EP 1117089 B1 | 14/11/2001 |
| | | JP 04219551 B2 | 04/02/2009 |
| | | JP 2001-236099 A | 31/08/2001 |

Form PCT/ISA/210 (patent family annex) (July 2009)